(19) Europäisches Patentamt
European Patent Office
Office européen des brevets

(11) **EP 2 428 390 B1**

(12) **EUROPÄISCHE PATENTSCHRIFT**

(45) Veröffentlichungstag und Bekanntmachung des Hinweises auf die Patenterteilung:
**20.02.2019   Patentblatt 2019/08**

(51) Int Cl.:
***B60L 11/18** (2006.01)*

(21) Anmeldenummer: **11173195.6**

(22) Anmeldetag: **08.07.2011**

(54) **VERFAHREN UND VORRICHTUNG ZUM EFFIZIENTEN AUFLADEN VON FAHRZEUGAKKUMULATOREN**

Device and method for charging vehicle batteries efficiently

Procédé et dispositif pour recharger efficacement des batteries de véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.09.2010   DE 102010040395**

(43) Veröffentlichungstag der Anmeldung:
**14.03.2012   Patentblatt 2012/11**

(73) Patentinhaber: **Siemens Aktiengesellschaft
80333 München (DE)**

(72) Erfinder: **Götz, Jürgen
82024 Taufkirchen (DE)**

(56) Entgegenhaltungen:
**EP-A1- 2 219 278        EP-A2- 0 314 155
EP-A2- 2 131 469        WO-A1-98/32209
WO-A2-2009/012018        JP-A- H11 285 159**

**Beschreibung**

Die Erfindung betrifft ein Verfahren und eine Vorrichtung zum effizienten Aufladen von Fahrzeugakkumulatoren elektrobetriebener Fahrzeuge durch eine Ladestation eines zentral geregelten Ladestationssystems (Sammelladestation).

Zunehmend werden Fahrzeuge zumindest teilweise elektrisch angetrieben. Dabei wird ein in dem Fahrzeug vorgesehener Elektromotor durch einen Fahrzeugakkumulator mit elektrischer Energie versorgt. Der Fahrzeugakkumulator kann in dem elektrobetriebenen Fahrzeug integriert sein. Darüber hinaus können Elektrofahrzeuge auch austauschbare Fahrzeugakkumulatoren aufweisen. Ein Fahrzeugakkumulator kann dabei in eingebautem oder ausgebautem Zustand durch eine Ladestation, die an ein Stromversorgungsnetzwerk angeschlossen ist, elektrisch aufgeladen werden. Eine Sammelladestation weist mehrere Ladestationen zum Aufladen elektrobetriebener Fahrzeuge auf. Sammelladestationen ermöglichen es, mehrere elektrobetriebene Fahrzeuge bzw. Fahrzeugakkumulatoren gleichzeitig aufzuladen. Diese Sammelladestationen können sich beispielsweise in Parkhäusern oder Firmenparkplätzen oder dergleichen befinden.

Aus der EP 2 219 278 A1 ist beispielsweise eine Steuerverfahren zum Aufladen mehrerer Fahrzeuge bekannt. Die EP 0 314 155 A2 offenbart eine Vorrichtung zum Laden mehrerer Batterien. Weiter ist aus der EP 2 131 469 A2 ein System zum Regeln der Leistung des Ladens einer Batterie bekannt. Vorrichtungen zum Laden von Batterien sind auch aus der WO 2009/012018 A2, aus der WO 98/32209 A1 und der JP H11 285159 A bekannt. Mit zunehmender Anzahl elektrobetriebener Fahrzeuge besteht zunehmend ein Bedarf Fahrzeugakkumulatoren, die an Ladestationen einer Sammelladestation angeschlossen sind, möglichst effizient aufzuladen, um eine zur Verfügung stehende Energie bzw. Lademenge beim Aufladen der Fahrzeugakkumulatoren sinnvoll zu verteilen und gleichzeitig den Bedürfnissen der Kunden, d.h. der Fahrzeugfahrer, Rechnung zu tragen.

Es ist daher eine Aufgabe der vorliegenden Erfindung, ein Verfahren und eine Vorrichtung zum effizienten Aufladen von Fahrzeugakkumulatoren elektrobetriebener Fahrzeuge durch eine Ladestation einer Sammelladestation zu schaffen.

Diese Aufgabe wird erfindungsgemäß durch ein Verfahren mit den in Patentanspruch 1 angegebenen Merkmalen und durch eine Vorrichtung mit den in Patentanspruch 6 angegebenen Merkmalen gelöst.

Bei einer möglichen Ausführungsform des erfindungsgemäßen Verfahrens wird der Ladeprioritätswert des angeschlossenen Fahrzeugakkumulators des elektrobetriebenen Fahrzeuges in Abhängigkeit der noch fehlenden Lademenge bis zum Erreichen des End-Ladezustandes und einer Abweichung des momentanen Ladezustandes des Fahrzeugakkumulators von einem durch eine Ladekurve bestimmten Soll-Ladezustand berechnet.

Bei einer möglichen Ausführungsform des erfindungsgemäßen Verfahrens wird der Fahrzeugakkumulator des elektrobetriebenen Fahrzeuges in der ersten Ladephase mit einer ersten Ladekurve bis zum Erreichen des Mindest-Ladezustandes und in einer zweiten Ladephase mit einer zweiten Ladekurve bis zum Erreichen des End-Ladezustandes aufgeladen.

Bei einer möglichen Ausführungsform des erfindungsgemäßen Verfahrens werden die erste Ladekurve sowie die zweite Ladekurve jeweils durch eine lineare Ladekurve gebildet.

Bei einer möglichen Ausführungsform des erfindungsgemäßen Verfahrens wird der Ladeprioritätswert des angeschlossenen Fahrzeugakkumulators des elektrobetriebenen Fahrzeugs zusätzlich in Abhängigkeit von weiteren Ladekriterien berechnet.

Bei einer möglichen Ausführungsform des erfindungsgemäßen Verfahrens weisen diese Ladekriterien eines Fahrzeugakkumulators des elektrobetriebenen Fahrzeuges,

> eine Fahrzeugart des elektrobetriebenen Fahrzeuges,
> eine Fahrzeugfunktion des elektrobetriebenen Fahrzeuges,
> eine Anschlusstageszeit des elektrobetriebenen Fahrzeuges und
> eine Vertragspriorität des elektrobetriebenen Fahrzeuges auf.

Bei einer möglichen Ausführungsform der erfindungsgemäßen Sammelladestation wird der Fahrzeugakkumulator des elektrobetriebenen Fahrzeuges über ein Ladekabel mit der Ladestation der Sammelladestation verbunden.

Bei einer weiteren möglichen Ausführungsform der erfindungsgemäßen Sammelladestation wird der Fahrzeugakkumulator des elektrobetriebenen Fahrzeuges mittels induktiver Kopplung mit der Ladestation der Sammelladestation verbunden.

Bei einer möglichen Ausführungsform der erfindungsgemäßen Sammelladestation besitzt die Ladestation eine Nutzerschnittstelle zur Eingabe von Nutzereinstellungen.

Bei einer möglichen Ausführungsform der erfindungsgemäßen Sammelladestation weisen diese Nutzereinstellungen den in der ersten Ladephase zu erreichenden Mindest-Ladezustand, den gewünschten Zeitraum bis zum Erreichen des Mindest-Ladezustandes, den in der zweiten Ladephase zu erreichenden End-Ladezustand, und den gewünschten Zeitraum bis zum Erreichen des End-Ladezustandes auf.

Bei einer möglichen Ausführungsform der erfindungsgemäßen Sammelladestation wird der zu erreichende Mindest-Ladezustand manuell als Anteil einer Gesamtladekapazität des Fahrzeugakkumulators in die Nutzerschnittstelle der Ladestation eingegeben.

Bei einer möglichen Ausführungsform der erfindungsgemäßen Sammelladestation wird die Gesamtladekapazität des Fahrzeugakkumulators durch die Ladestation anhand des Typs des Fahrzeugakkumulators oder anhand des Typs des elektrobetriebenen Fahrzeuges durch Zugriff auf eine Datenbank bestimmt.

Bei einer möglichen Ausführungsform der erfindungsgemäßen Sammelladestation weist die Sammelladestation einen Lade-Scheduler auf, der ein Verfahren zum effizienten Aufladen eines Fahrzeugakkumulators einer elektrobetriebenen Fahrzeuges durch eine Ladestation einer Sammelladestation ausführt und die Ladestationen der Sammelladestation entsprechend ansteuert, wobei zum effizienten Aufladen des Fahrzeugakkumulators der angeschlossene Fahrzeugakkumulator jeweils ausgehend von einem Anfangs-Ladezustand entsprechend eines berechneten Ladeprioritätswertes aufgeladen wird, bis der Ladezustand des Fahrzeugakkumulators einen einstellbaren Ladezustand erreicht und wobei die berechneten Ladeprioritätswerte der an den Ladestationen der Sammelladestation gleichzeitig angeschlossenen Fahrzeugakkumulatoren die Reihenfolge bestimmt, mit der die verschiedenen Fahrzeugakkumulatoren innerhalb eines Lade-zeit-Intervalls aufgeladen werden.

Bei einer möglichen Ausführungsform der erfindungsgemäßen Sammelladestation ist die Sammelladestation an ein Stromversorgungsnetz angeschlossen und bezieht die zum Laden der Fahrzeugakkumulatoren benötigte Lademenge aus dem Stromversorgungsnetz.

Bei einer möglichen Ausführungsform der erfindungsgemäßen Sammelladestation ist der an die Ladestation angeschlossene Fahrzeugakkumulator in dem elektrobetriebenen Fahrzeug eingebaut.

Bei einer alternativen Ausführungsform der erfindungsgemäßen Sammelladestation ist der an die Ladestation angeschlossene Fahrzeugakkumulator aus dem elektrobetriebenen Fahrzeug ausgebaut.

Im Weiteren werden mögliche Ausführungsformen des erfindungsgemäßen Verfahrens und der erfindungsgemäßen Vorrichtung zum effizienten Aufladen von Fahrzeugakkumulatoren elektrobetriebener Fahrzeuge durch eine Ladestation einer Sammelladestation unter Bezugnahme auf die beigefügten Figuren beschrieben.

Figur 1   zeigt ein Ablaufdiagramm zur Erläuterung eines möglichen Ausführungsbeispiels eines erfindungsgemäßen Verfahrens zum effizienten Aufladen eines Fahrzeugakkumulators;

Figur 2   zeigt ein Diagramm zur Erläuterung einer möglichen Ausführungsform einer erfindungsgemäßen Sammelladestation;

Figur 3   zeigt ein Ladediagramm zur Erläuterung einer möglichen Ausführungsform des erfindungsgemäßen Verfahrens.

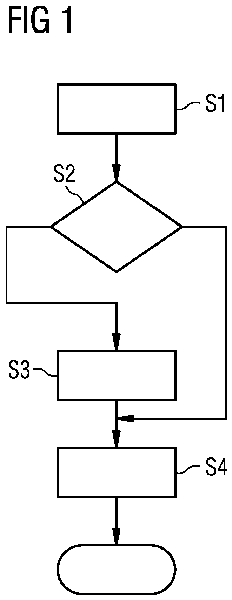

Wie man aus Fig. 1 erkennen kann, wird bei dem erfindungsgemäßen Verfahren zum effizienten Aufladen eines Fahrzeugakkumulators eines elektrobetriebenen Fahrzeuges durch eine Ladestation einer Sammelladestation nach Anschließen des Fahrzeugakkumulators an eine Ladestation der Sammelladestation zunächst eine Benutzereingabe, die beispielsweise über eine Nutzerschnittstelle der jeweiligen Ladestation im Schritt S1 eingegeben wird, erwartet. Mit dieser Benutzereingabe kann ein Nutzer, beispielsweise ein Fahrer des elektrobetriebenen Fahrzeuges, entscheiden, ob die Aufladung des Fahrzeugakkumulators einstufig in einer Ladephase oder zweistufig in zwei Ladephasen erfolgen soll. In der ersten Ladephase erfolgt ein Aufladen des Fahrzeugakkumulators priorisiert bis zum Erreichen eines Mindest-Ladezustandes. In der zweiten Ladephase erfolgt die Aufladung des Fahrzeugakkumulators zum Erreichen eines End-Ladezustandes.

In einem Schritt S2 wird die Benutzereingabe ausgewertet und entschieden, ob der Nutzer eine zweistufige bzw. zweiphasige Aufladung wünscht oder nicht. Wenn der Nutzer eine zweiphasige Aufladung gewählt hat, erfolgt zunächst in einem Schritt S3 eine Aufladung des Fahrzeugakkumulators ausgehend von seinem Anfangs-Ladezustand innerhalb eines einstellbaren Ladezeitraums bis zum Erreichen eines einstellbaren Mindest-Ladezustandes. Wird in Schritt S2 festgestellt, dass der Nutzer diese erste Ladephase überspringen möchte und direkt eine Aufladung des Fahrzeugakkumulators zu einem End-Ladezustand wünscht, erfolgt eine direkte Aufladung zum Erreichen des End-Ladezustandes in einem Schritt S4, wie in Fig. 1 dargestellt ist.

Der angeschlossene Fahrzeugakkumulator wird ausgehend von einem Anfangs-Ladezustand entsprechend eines berechneten Ladeprioritätswertes aufgeladen, bis der Ladezustand des Fahrzeugakkumulators einen einstellbaren Ladezustand erreicht. Dabei bestimmen die berechneten Ladeprioritätswerte der an den Ladestationen der Sammelladestation gleichzeitig angeschlossenen Fahrzeugakkumulatoren die Reihenfolge, mit der die verschiedenen Fahrzeugakkumulatoren innerhalb eines Lade-Zeitintervalls aufgeladen werden. Beim Anschluss des Fahrzeugakkumulators in Schritt S1 an die Ladestation der Sammelladestation wird nach einer entsprechenden Nutzereingabe der Fahrzeugakkumulator zunächst in der ersten Ladephase in Schritt S3, ausgehend von seinem Anfangs-Ladezustand die Ladestation gegenüber anderen Fahrzeugakkumulatoren, die an weiteren Ladestationen der Sammelladestation angeschlossen sind, priorisiert aufgeladen, bis der Ladezustand des Fahrzeugakkumulators innerhalb eines einstellbaren Ladezeitraumes einen einstellbaren Mindest-Ladezustand erreicht. In einer zweiten Ladephase erfolgt dann in einem Schritt S4 die endgültige Aufladung des Fahrzeugakkumulators bis zum Erreichen des Endladezustandes in der durch die berechneten Ladeprioritätswerte der Fahrzeugakkumulatoren bestimmten Reihenfolge.

Bei einer möglichen Ausführungsform wird dabei der Ladeprioritätswert des angeschlossenen Fahrzeugakkumulators des elektrobetriebenen Fahrzeuges in Abhängigkeit der noch fehlenden Lademenge bis zum Erreichen des End-Ladezustandes und in Abhängigkeit einer Abweichung des momentanen Ladezustandes des Fahrzeugakkumulators von einem durch eine Ladekurve bestimmten Soll-Ladezustand berechnet. Dabei wird der Fahrzeugakkumulator des elektrobetriebenen Fahrzeuges in Schritt S3 in der ersten Ladephase mit einer ersten Ladekurve bis zum Erreichen des Mindest-Ladezustandes aufgeladen. Anschließend wird der Fahrzeugakkumulator in der zweiten Ladephase in Schritt S4 mit einer zweiten Ladekurve bis zum Erreichen des End-Ladezustandes aufgeladen.

Bei einer möglichen Ausführungsform ist die in Schritt 3 verwendete erste Ladekurve sowie die in Schritt S4 verwendete zweite Ladekurve jeweils eine lineare Ladekurve.

Bei einer alternativen Ausführungsform sind auch andere Ladekurvenverläufe, zum Beispiel eine exponentielle Annäherung oder dergleichen möglich.

Die in Schritt S3 und S4 verwendeten Ladekurven können bei einer möglichen Ausführungsform statisch vorgegeben sein. Bei einer alternativen Ausführungsform sind die in den Schritten S3, S4 verwendeten Ladekurven dynamisch während des Ladevorganges anpassbar.

Die Berechnung des Ladeprioritätswertes des angeschlossenen Fahrzeugakkumulators kann bei einer möglichen Ausführungsform durch einen in der Sammelladestation vorgesehenen Lade-Scheduler ausgeführt werden. Der Lade-Scheduler verfügt beispielsweise über einen Mikroprozessor zur Ausführung eines entsprechenden Berechnungsalgorithmus. Der Ladeprioritätswert des angeschlossenen Fahrzeugakkumulators wird bei einer möglichen Ausführungsform in Abhängigkeit von der noch fehlenden Lademenge bis zum Erreichen des End-Ladezustandes sowie einer Abweichung des momentanen Ladezustandes des Fahrzeugakkumulators von einem durch die jeweilige Ladekurve bestimmten Soll-Ladezustandes berechnet.

Bei einer weiteren Ausführungsform wird der Ladeprioritätswert des angeschlossenen Fahrzeugakkumulators durch die Berechnungseinheit des Lade-Schedulers zusätzlich in Abhängigkeit von weiteren Ladekriterien berechnet. Ladekriterien können beispielsweise die Fahrzeugart des elektrobetriebenen Fahrzeuges sowie die Fahrzeugfunktion des elektrobetriebenen Fahrzeuges umfassen. Weitere Ladekriterien sind eine Anschlusstageszeit des elektrobetriebenen Fahrzeuges sowie eine Vertragspriorität des elektrobetriebenen Fahrzeuges.

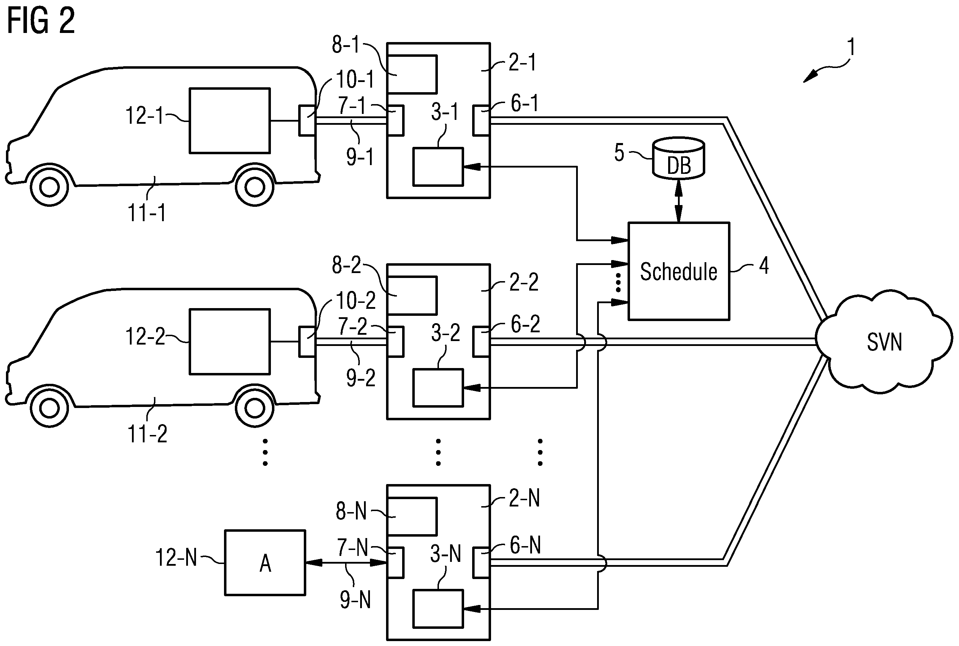

Fig. 2 zeigt ein Ausführungsbeispiel für eine erfindungsgemäße Sammelladestation 1. Die Sammelladestation 1 verfügt dabei über eine vorgegebene Anzahl von Ladestationen 2-1, 2-2, ... 2-n. Die Ladestationen 2-i verfügen vorzugsweise jeweils über eine interne Steuerung 3-i, die über eine Steuerleitung bzw. einen Steuerbus mit dem Lade-Scheduler 4 der Sammelladestation 1 verbunden ist. Bei einer möglichen Ausführungsform hat der Lade-Scheduler 4 Zugriff auf einen lokalen Datenspeicher oder über Netzwerk auf eine Datenbank 5. Die Datenbank 5 kann beispielsweise Daten hinsichtlich unterschiedlicher Fahrzeugakkumulatortypen und unterschiedlicher elektrobetriebener Fahrzeuge enthalten. Bei einer möglichen Ausführungsform ist der Scheduler 4 mit der Datenbank 5 über ein Datennetzwerk, beispielsweise das Internet, verbunden. Jede Ladestation 2-i der Sammelladestation 1 weist jeweils eine Schnittstelle 6-i zum Anschluss an ein Stromversorgungsnetzwerk SVN auf. Außerdem weisen die Ladestationen 2-i jeweils eine Schnittstelle 7-i zum Anschluss eines Fahrzeugakkumulators an die Ladestation 2-i auf. Darüber hinaus kann an jeder Ladestation 2-i eine Nutzerschnittstelle bzw. ein Graphical User Interface 8-i vorgesehen sein. An die Ladeschnittstelle 2-i kann bei dem in Fig. 2 dargestellten Ausführungsbeispiel ein Fahrzeugakkumulator zum Aufladen angeschlossen werden. Der Fahrzeugakkumulator kann dabei in einem eingebauten oder in einem ausgebauten Zustand aufgeladen werden. In dem in Fig. 2 dargestellten Ausführungsbeispiel wird über ein Ladekabel 9-1, 9-2 jeweils ein Ladeanschluss 10-1, 10-2 eines elektrobetriebenen Fahrzeuges 11-1, 11-2 angeschlossen. Der Ladeanschluss 10-1, 10-2 ist dabei über eine interne Ladeleitung des Fahrzeuges an einen darin eingebauten Fahrzeugakkumulator 12-1, 12-2 angeschlossen. Bei der Ladestation 2-N der Sammelladestation 1 ist ein Fahrzeugakkumulator 12-N direkt über ein Ladekabel 9-N an die Ladeschnittstelle 7-N der Ladestation 2-N angeschlossen. Bei dem in Fig. 2 dargestellten Ausführungsbeispiel sind somit die Fahrzeugakkumulatoren 12-i über Ladekabel an die Ladestation 2-i angeschlossen.

Bei einer alternativen Ausführungsform kann die Aufladung der Fahrzeugakkumulatoren 12-i auch mittels einer induktiven Kopplung ausgeführt werden.

Über die Nutzerstelle 8-i der Ladestation 2-i besteht die Möglichkeit für einen Nutzer, beispielsweise einen Fahrer des elektrobetriebenen Fahrzeuges, bestimmte Benutzereinstellungen vorzunehmen. Der Nutzer bzw. Fahrer kann dabei angeben, ob er eine einphasige bzw. einstufige Aufladung oder eine zweiphasige bzw. zweistufige Aufladung wünscht. Hierzu hat der Nutzer bzw. Fahrer die Möglichkeit, diese Parameter über die Nutzerschnittstelle 8-i in der Ladestation 2-i einzugeben. Dabei kann der Nutzer bzw. Fahrer den in der ersten Ladephase zu erreichenden Mindest-Ladezustand und einen Ladezeitraum bis zum Erreichen des Mindest-Ladezustandes $P_{min}$ eingeben. Weiterhin kann

der Fahrer den in der zweiten Ladephase zu erreichenden End-Ladezustand $P_{end}$ und einen gewünschten Zeitraum bis zum Erreichen des End-Ladezustandes eingeben. Bei einer möglichen Ausführungsform wird durch den Nutzer der zu erreichende Mindest-Ladezustand $P_{min}$ manuell als Anteil einer Gesamtladekapazität des Fahrzeugakkumulators 12-i eines Fahrzeuges 11-i über die Benutzerschnittstelle 8-i eingegeben. Bei einer möglichen Ausführungsform wird dabei die Gesamtladekapazität $C_{Ges}$ des aufzuladenden Fahrzeugakkumulators 12-i durch die Ladestation 2-i anhand des Typs des Fahrzeugakkumulators bestimmt. Dabei kann die Gesamtladekapazität $C_{Ges}$ des Fahrzeugakkumulators 12-i auch anhand des Typs des elektrobetriebenen Fahrzeugs 11-i bestimmt werden.

Bei einer möglichen Ausführungsform greift der Lade-Scheduler 4 zur Bestimmung der Gesamtladekapazität $C_{Ges}$ des Fahrzeugakkumulators 12-i auf Daten zu, die beispielsweise in der Datenbank 5 abgespeichert sind. In dieser Ausführungsform erfasst die Ladestation 2-i den Typ des Fahrzeugakkumulators 12-i oder den Typ des elektrobetriebenen Fahrzeuges 11-i und meldet diesen Typ an den Lade-Scheduler 4, welcher auf die Datenbank 5 zugreift. Der Lade-Scheduler 4 meldet dann die Gesamtladekapazität $C_{Ges}$ des Fahrzeugakkumulators 12-i des jeweiligen Fahrzeuges 11-i an die interne Steuerung 3-i der Ladestation 2-i. Die Ladestationen 2-i der Sammelladestation 1 sind, wie in Fig. 2 dargestellt, an ein Stromversorgungsnetzwerk SVN angeschlossen und beziehen die zum Laden der Fahrzeugakkumulatoren 12-i benötigten Lademengen aus dem Stromversorgungsnetz SVN.

Bei einer möglichen Ausführungsform kann die Vielzahl von Fahrzeugakkumulatoren 12-i, die an der Sammelladestation 1 angeschlossen sind, auch für eine flexible Speicherung elektrischer Energie für das Stromversorgungsnetzwerk SVN verwendet werden.

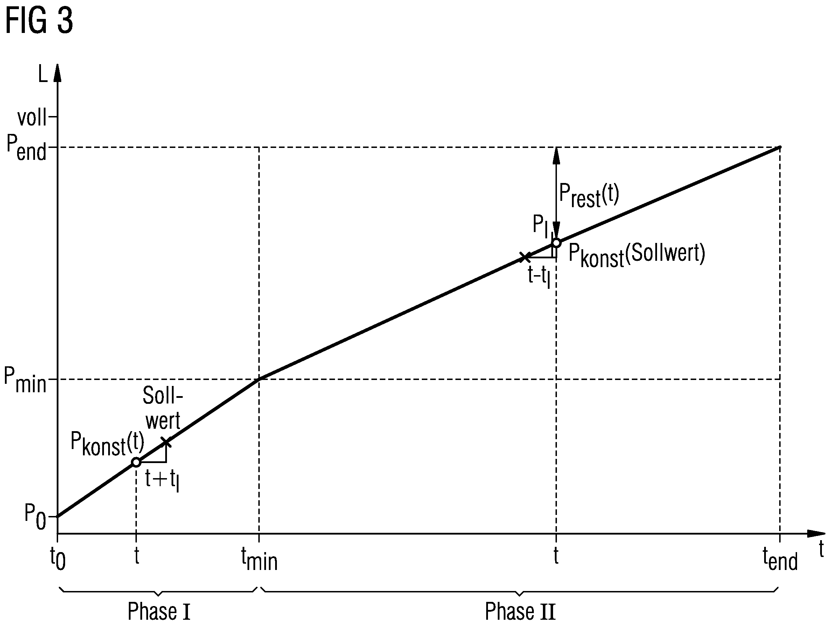

Fig. 3 zeigt ein Ladezeitdiagramm zur Erläuterung eines Ausführungsbeispiels des erfindungsgemäßen Verfahrens zum effizienten Aufladen eines Fahrzeugakkumulators eines elektrobetriebenen Fahrzeuges durch eine Ladestation einer Sammelladestation 1 gemäß der Erfindung. Es wird der Ladezustand L über der Zeit t dargestellt. In dem in Figur 3 dargestellten Ausführungsbeispiel erfolgt die Aufladung des Fahrzeugakkumulators in zwei Phasen, jeweils mit einer linearen Ladekurve. Die erste Ladephase I stellt dabei eine optionale Ladephase dar, wobei der Ladevorgang im Schritt S3 des in Fig. 1 dargestellten Ladeablaufs ausgeführt wird. In dieser ersten Ladephase I muss der Fahrzeugakkumulator anhand eines bestimmten vorgegebenen Ladezeitraums, d.h. bis zu einem gewissen Zeitpunkt $t_{min}$, einen minimalen Ladezustand $P_{min}$ entsprechend der Nutzeranforderung erreichen. Diese optionale Ladephase I wird nur durchlaufen, wenn der Nutzer bzw. Fahrer über die Nutzerschnittstelle 8-i einen Wert für die minimale Lademenge $P_{min}$ eingibt. In einer zweiten nicht-optionalen Pflichtphase II wird ein maximaler End-Ladezustand $P_{end}$ erreicht. Dabei soll der Fahrzeugakkumulator bis zu einem gewissen Zeitpunkt $t_{end}$ einen maximalen Ladezustand $P_{end}$ erreichen. Die Ladephase II wird durchgeführt, sobald die Ladephase I beendet ist. Die Ladephase I ist optional und kann auch übersprungen werden.

Hat der Fahrer das elektrobetriebene Fahrzeug 11-i an einer Ladesäule 2-i der Sammelladestation 1 angeschlossen, kann er die folgenden Parameter an der Ladesäule 2-i eingeben:

- einen gewünschten minimalen Ladezustand $P_{min}$ (optional),
- einen gewünschten Zeitpunkt bis zum Erreichen des minimalen Ladezustands $P_{min}$, d.h. den Ladezeitraum zum Erreichen des Ladezeitpunktes $t_{min}$ (optional),
- den gewünschten End-Ladezustand $P_{end}$ (verpflichtend) und
- einen gewünschten Zeitpunkt zum Erreichen des End-Ladezustandes $P_{end}$, d.h. den gewünschten Zeitraum bis zum Erreichen des End-Ladezustandes (verpflichtend).

Der Betreiber der Sammelladestation 1 errechnet anhand der eingegebenen Daten bzw. Kundenwünsche, ob der gewünschte minimale Ladezustand innerhalb des Zeitraumes $t_{min}$ realisiert bzw. erreichbar ist. Dies kann anhand einer vorab reservierten Gesamtenergiemenge erfolgen. Akzeptiert der Betreiber der Sammelladestation 1 diese beiden gegebenen Parameter, sichert er dem Nutzer die geforderte Mindest-Lademenge $P_{min}$ zum Zeitpunkt $t_{min}$ zu und zeigt dem Fahrer beispielsweise über ein Display der Nutzerschnittstelle 8-i einen Festpreis an. Akzeptiert der Fahrer bzw. Kunde den angezeigten Preis durch eine entsprechende Nutzereingabe, wird vereinbart, dass ein Mindest-Ladezustand $P_{min}$ zum Zeitpunkt $t_{min}$ zum vereinbarten bzw. festgesetzten Preis zwingend erreicht wird. Akzeptiert der Nutzer bzw. Kunde den angezeigten Preis nicht, wird die Ladephase I übersprungen.

Bei einer möglichen Ausführungsform kann der Betreiber der Sammelladestation 1 sofern er die von dem Nutzer bzw. Kunden eingegebenen Parameter, d.h. die geforderte Mindest-Lademenge $P_{min}$ und den geforderten Ladezeitraum bis zum Erreichen des Mindest-Ladezustandes $T_{min}$ nicht akzeptiert, eigene Werte für die beiden Parameter inklusive einer dazugehörigen Preises vorschlagen bzw. anzeigen. Akzeptiert der Nutzer bzw. Kunde bei diesem Ausführungsbeispiel die von dem Betreiber der Sammelladestation 1 vorgeschlagenen neuen Parameter hinsichtlich des Mindest-Ladezustandes $P_{min}$ und des dazugehörigen Ladezeitraumes, ist somit vereinbart, dass der Mindest-Ladezustand $P_{min}$ innerhalb des dazugehörigen Ladezeitraumes zum festgesetzten Preis sicher erreicht wird. Akzeptiert bei dieser Ausführungsform der Nutzer bzw. Kunde diese vom Betreiber der Sammelladestation 1 vorgeschlagenen neuen Parameter und den zugehörigen Preis nicht, wird die Ladephase I übersprungen. Für die Ladephase II gilt für den Preis der Lade- bzw. Energiemenge ein maximaler Preis, der an der Ladestation 2-i angezeigt wird und nicht überschritten werden darf. In der ersten Ladephase I, d.h. in dem Schritt S3 des in Fig. 1 dargestellten Verfahrens, wird zunächst sichergestellt, dass alle Fahrzeugakkumulatoren bzw. Fahrzeuge, die sich in der Ladephase I befinden, deren Parameter $P_{min}$ und $t_{min}$ akzeptiert wurden, seitens der Sammelladestation 1 bedient werden können. Dabei verfügt der Betreiber der Sammelladestation 1 zumindest über soviel Ladekapazität, dass er alle Fahrzeugakkumulatoren bzw. elektrobetriebenen Fahrzeuge in der Ladephase I bedienen kann bzw. eine entsprechende Ladung von extern durch Zukauf erhält.

Alle Entscheidungen darüber, welche Fahrzeugakkumulatoren 12-i innerhalb des aktuellen Scheduling-Intervalles geladen werden und welche nicht (für beide Ladephasen), werden am Beginn des Scheduling-Intervalls getroffen und werden während des aktuellen Scheduling-Intervalls nicht mehr geändert.

Außerdem ist zu beachten, dass jeder Fahrzeugakkumulator 12-i innerhalb eines Scheduling-Intervalls stets entweder gar keine Lademenge zugeteilt bekommt, oder aber genau die feste Energiemenge $P_I$, die der Fahrzeugakkumulator innerhalb des Zeitintervalls $t_I$ aufnehmen kann. Diese Lademenge ist der Sammelladestation anhand des Typs des Fahrzeugakkumulators bzw. der möglichen Ladekapazität der Ladestation 2-i bekannt.

Der Fahrzeugakkumulator 12-i muss bis zu einem gewissen Zeitpunkt $t_{min, i}$ bis zu einem gewissen Ladelevel und einem Mindest-Ladezustand $P_{min, i}$ aufgeladen sein. Zum Zeitpunkt eines ersten Scheduling-Intervalls $t_0$ weist der Fahrzeugakkumulator 12-i einen Anfangs-Ladezustand $P_{0, i}$ auf. Die in Fig. 3 dargestellte Soll-Ladekurve zwischen $t_0$ und $t_{min}$ kann für jeden Fahrzeugakkumulator 12-i individuell an eine verfügbare Energiemenge angepasst werden. In dem in Figur 3 dargestellten Ausführungsbeispiel ist eine lineare Soll-Ladekurve in Ladephase I vorgesehen. In der Ladephase I werden dann innerhalb des aktuellen Scheduling-Zeitintervalls alle diejenigen Fahrzeugakkumulatoren geladen, deren Füllzustand nach Ablauf von $t_I$ kleiner als das erforderliche Minimum wäre, wobei $t_I$ die Dauer des Scheduling-Intervalls ist

$$P_{konst, i}(t) = P_{0, i} + \left[ (P_{min, i} - P_{0, i}) / (t_{min, i} - t_{0, n}) \right] * (t - t_{0, i});$$

```
if
```

$$P_i(t) < P_{konst, i}(t) + \left[ (P_{min, i} - P_{0, n}) / (t_{min, n} - t_{0, n}) \right] * t_I \quad \text{(für lineare Soll-Ladekurve)}$$

$$P_i(t) < P_{Soll, i}(t + t_I) \quad \text{(für beliebige Soll-Ladekurve)}$$

```
then
    i aufladen im Intervall tᵢ : Pᵢ(t+ tᵢ)=Pᵢ(t)+Pᵢ,ᵢ*tᵢ;
else
    i nicht laden im Intervall tᵢ;
```

Die Summe der erforderlichen Energiemenge im aktuellen Scheduling-Intervall für alle elektrobetriebenen Fahrzeuge bzw. Fahrzeugakkumulatoren in Ladephase I für das Zeitintervall $t_I$ ergibt dann $P_{Phase1}(t_I)$.

Die verbleibende Energiemenge $P_{Phase2}(t_I)$ für die elektrobetriebenen Fahrzeuge bzw. Fahrzeugakkumulatoren in Ladephase II im aktuellen Scheduling-Intervall ergibt sich dann zu:

$$P_{Phase2}(t_I) = P_{tot}(t_I) - P_{Phase1}(t_I) \quad \text{(korrekte Gleichung)}$$

wobei $P_{tot}(t_I)$ diejenige Energiemenge ist, die den Betreiber der Sammelladestation 1 im Zeitintervall $(t_I)$ zur Verfügung steht.

Nach Abschluss der Ladephase I haben in der Ladephase II alle elektrobetriebenen Fahrzeuge bzw. Fahrzeugakkumulatoren, die bereits den minimalen Ladezustand $P_{min}$ erreicht haben, die Möglichkeit, noch bis zum Ladezustand $P_{end, i}$ aufgeladen zu werden. Der Fahrzeugakkumulator 12-i bzw. das elektrobetriebene Fahrzeug 11-i können also in dieser Ladephase II bis zu einem gewissen Zeitpunkt $t_{end, i}$ bis zu einem gewissen Ladezustand $P_{end, i}$ aufgeladen werden. Zum Zeitpunkt $t_{min, i}$ muss das elektrobetriebenen Fahrzeug bzw. der Fahrzeugakkumulator einen Ladezustand von $P_{min, i}$ aufweisen.

Die in Fig. 3 dargestellte Soll-Ladekurve zwischen dem Zeitpunkt $t_{min}$ und dem Zeitpunkt $t_{end}$ kann bei einer möglichen Ausführungsform für jedes elektrobetriebene Fahrzeug individuell an die verfügbare Energiemenge angepasst werden. In dem in Figur 3 dargestellten Ausführungsbeispiel ist in der zweiten Ladephase II ebenfalls eine lineare Soll-Ladekurve vorgesehen.

Beim erfindungsgemäßen Verfahren wird für jedes elektrobetriebene Fahrzeug bzw. jeden Fahrzeugakkumulator in Ladephase II ein Kriteriumswert bzw. ein Lade-Prioritätswert vorzugsweise auf folgende Weise berechnet:

$\Delta_i(t_{min,i})=0$; (Initialisierung des $\Delta$-Werts des Ladevorgangs relativ zur Soll-Laderate)
$P_{rest,i}(i)=P_{end,i}-P_i(t)$; (noch zu ladende Menge bis $t_{end,i}$)
$P_{konst,i}=\lfloor(P_{end,j} - P_{min,i})/(t_{end,i} - t_{min,i})\rfloor * t_I$; (bei linearer Soll-Kurve: erforderliche Laderate im vorigen Sched.-Intervall)
$P_{konst,i}=P_{Soll, i}(t)-P_{Soll,i}(t-t_I))$; (bei beliebiger Soll-Kurve: erforderliche Laderate im vorigen Sched.-Intervall)

```
if (i ausgewählt bei t- t_I)      (i im letzten Scheduling-
Intervall gewählt)

                              then
                                P_I,i(t)=P_I,i;
                              else
                                P_I,i(t)=0;
```

Es wird dann eine Abweichung des Ist- von einem Soll-Wert berechnet wie folgt:

$$\Delta_i(t) = \Delta_i(t - t_I) + (P_{konst,i} - P_{I,i}(t))$$

Daraus lässt sich ein Kriteriumswert bzw. ein Ladeprioritätswert für jedes elektrobetriebene Fahrzeug 11-i bzw. jeden Fahrzeugakkumulator 12-i für die Ladephase II wie folgt bestimmen:

$$crit_i(t) = \min(P_{rest,i}(t), \Delta_i(t))$$

Die Kriteriumswerte bzw. Ladeprioritätswerte aller elektrobetriebenen Fahrzeuge 11-i bzw. aller Fahrzeugakkumulatoren 12-i in Ladephase II werden nun der Größe nach geordnet, d.h. vom größten Ladeprioritätswert bis hin zum niedrigsten Ladeprioritätswert sortiert und in eine Kriterienliste eingetragen. Entsprechend der neuen Anordnung in dieser Kriterienliste sind die Fahrzeuge 11-i bzw. die Fahrzeugakkumulatoren 12-i nun neu sortiert gemäß ihrem Ladeprioritätswert. Diese neue Anordnung ist hier mit dem Index j gekennzeichnet. Der Index j läuft vom Wert 1 (höchster Ladeprioritätswert) bis m (niedrigster Ladeprioritätswert aller Fahrzeuge bzw. Akkumulatoren in Ladephase II).

Es werden alle elektrobetriebenen Fahrzeuge 11-i bzw. Fahrzeugakkumulatoren 12-i im aktuellen Lade-Zeitintervall $t_I$ durch die Sammelladestation 1 bedient, solange der Betreiber der Sammelladestation 1 über genügend Energie verfügt:
While

$$P_{Sum}(1,...j-1) + P_{I,j} \leq P_{Phase2}(t_I)$$

bediene Fahrzeugakkumulator 12-i, der zum Index j gehört, im aktuellen Scheduling-Intervall.

Die entsprechenden Werte $P_i(t)$ werden entsprechend aktualisiert.

Das flexible Scheduling-Zeitintervall $t_I$ kann in einer möglichen Ausführungsform sogar dynamisch von dem Betreiber der Sammelladestation 1 eingestellt werden. Bei einer möglichen Ausführungsform liegt das Scheduling-Zeitintervall $t_I$ in einem Bereich von 1 - 15 Minuten. Für jedes Scheduling-Zeitintervall bzw. Lade-Zeitintervall werden die Ressourcen, d.h. die Lademenge, für jedes elektrobetriebene Fahrzeug bzw. Fahrzeugakkumulator neu zugeteilt und bleiben im ganzen Lade-Zeitintervall konstant. Das elektrobetriebene Fahrzeug bzw. der Fahrzeugakkumulator bekommt in einem Scheduling-Intervall bzw. Lade-Zeitintervall entweder keine Energiemenge zugeteilt oder die feste Energiemenge $P_I$, i, welche die Ladesäule 2-i innerhalb des Lade-Zeitintervalls $t_I$ dem elektrobetriebenen Fahrzeug 11-i zuführen kann (diskreter On/Off-Mechanismus). Der Zeitpunkt $t_0$ stellt für jedes elektrobetriebene Fahrzeug 11-i den Zeitpunkt des Beginns des ersten Scheduling-Intervalls bzw. Lade-Zeitintervalls $t_I$ nach Anschluss an die entsprechende Ladestation 2-i dar.

Das erfindungsgemäße Verfahren zum effizienten Aufladen eines Fahrzeugakkumulators 12-i eines elektrobetriebenen Fahrzeugs 11-i durch eine Ladestation 2-i einer Sammelladestation 1 trägt sowohl den Interessen des Betreibers der Sammelladestation 1 hinsichtlich einer effizienten Verteilung der elektrischen Energie pro Scheduling-Intervall als auch den Wünschen der Fahrer bzw. Nutzer hinsichtlich einer optimalen Bedienung Rechnung. Das erfindungsgemäße Verfahren stellt sicher, dass, falls ein Nutzer einen Mindest-Ladezustand nach einer gewissen Zeit wünscht (bei einem vereinbarten Festpreis) der Nutzer bzw. Fahrer einen Mindest-Ladezustand garantiert erhält. Die Ladephase I bis zum Erreichen des Mindest-Ladezustandes hat stets Priorität vor Ladephase II, d.h. Erreichen des maximalen Ladezustandes. Während Ladephase I und Ladephase II kann der Betreiber der Sammelladestation 1 die Lade-Sollkurve entsprechend anpassen, und das sogar dynamisch, d.h. von Scheduling-Intervall zu Scheduling-Intervall. In Ladephase I wird bei jedem Scheduling-Intervall $t_l$ dafür gesorgt, dass nach Ablauf des Scheduling-Intervalls der erreichte Ladezustand mindestens dem Sollwert der Sollkurve entspricht.

In Ladephase II wird anhand von berechneten Kriteriumswerten bzw. Ladeprioritätswerten bestimmt, welche elektrobetriebenen Fahrzeuge bzw. Fahrzeugakkumulatoren im aktuellen Scheduling-Zeitintervall geladen werden sollen und welche nicht. Dabei wird sowohl die Abweichung des Ist- von dem Soll-Wert des Ladezustandes berücksichtigt als auch die noch fehlende Lademenge bis zum Erreichen der maximalen Lademenge. Das erfindungsgemäße Verfahren lässt dabei dem Betreiber der Sammelladestation 1 eine größtmögliche Flexibilität und Effizienz bei der Verteilung seiner verfügbaren Energieressourcen und garantiert zugleich dem Fahrer bzw. Kunden einen verlässlichen Mindest-Ladezustand beim Einhalten eines bestimmten Preises. Das erfindungsgemäße Verfahren ist einfach und leicht implementierbar. Das erfindungsgemäße Verfahren berücksichtigt aus Sicht des Betreibers der Sammelladestation 1 alle wesentlichen Kriterien, insbesondere eine einfache Preiskalkulation sowie eine flexible und dynamische Anpassung an kurzfristige Schwankungen von Energiepreisen und Energiemengen. Der Benutzer bzw. Fahrer hat aufgrund der Zweiphasigkeit des erfindungsgemäßen Verfahrens sowohl die Möglichkeit, eine garantierte Lademenge zu einer vorgegebenen Zeit und einem vorgegebenen Preis zu erhalten als auch eine erwünschte (aber nicht garantierte) Lademenge innerhalb einer gewünschten Zeit zu erhalten, die auch mit großer Wahrscheinlichkeit erreicht wird. Auf diese Weise nutzt der Betreiber der Sammelladestation 1 seine Energieressourcen im Rahmen der aktuellen Menge an angeschlossenen elektrobetriebenen Fahrzeugen mit Hilfe des erfindungsgemäßen Verfahrens optimal. Das erfindungsgemäße Verfahren schafft somit einen zweiphasigen Scheduling-Mechanismus beim Aufladen elektrobetriebener Fahrzeuge in Umgebungen mit zentral verwalteten Ladestationen einer Sammelladestation 1.

## Patentansprüche

1. Verfahren zum effizienten Aufladen von Fahrzeugakkumulatoren (12-i) elektrobetriebener Fahrzeuge (11-i) durch Ladestationen (2-i) einer Sammelladestation (1),
   wobei die Fahrzeugakkumulatoren (12-i) sich jeweils entweder in einer ersten Ladephase (S3) oder in einer zweiten Ladephase (S4) befinden,
   wobei nach Anschluss des jeweiligen Fahrzeugakkumulators (12-i) an die jeweilige Ladestation (2-i) nach einer entsprechenden Nutzereingabe der Fahrzeugakkumulator (12-i) zunächst in der ersten Ladephase (S3) ausgehend von einem Anfangsladezustand ($P_0$) des angeschlossenen Fahrzeugakkumulators (1) durch die Ladestation (2-i) gegenüber anderen Fahrzeugakkumulatoren (12-i), die an weiteren Ladestationen (2-i) der Sammelladestation (1) angeschlossen sind und sich in der zweiten Ladephase (S4) befinden, priorisiert aufgeladen wird, bis der Ladezustand dieses Fahrzeugakkumulators (12-i) innerhalb eines einstellbaren Lade-Zeitraumes ($t_{min}$) einen einstellbaren Mindest-Ladezustand ($P_{min}$) erreicht,
   wobei in der zweiten Ladephase (S4) die endgültige Aufladung des angeschlossenen Fahrzeugakkumulators (12-i) bis zum Erreichen eines einstellbaren End-Ladezustandes ($P_{end}$) erfolgt, entsprechend eines berechneten Ladeprioritätswertes dieses Fahrzeugakkumulators (12-i),
   wobei die berechneten Ladeprioritätswerte der an den Ladestationen (12-i) der Sammelladestation (1) gleichzeitig angeschlossenen Fahrzeugakkumulatoren (12-i), welche sich in der zweiten Ladephase (S4) befinden, die Reihenfolge bestimmen, in der die verschiedenen Fahrzeugakkumulatoren (12-i) innerhalb eines Lade-Zeit-Intervalls in der zweiten Ladephase (S4) aufgeladen werden, und
   wobei das Aufladen der Fahrzeugakkumulatoren in einstellbaren Scheduling-Zeitintervallen erfolgt, wobei jeweilige Lademengen den Fahrzeugakkumulatoren (12-i) in jedem Scheduling-Zeitintervall neu zugeteilt werden.

2. Verfahren nach Anspruch 1,
   wobei der Ladeprioritätswert des angeschlossenen Fahrzeugakkumulators (12-i) des elektrobetriebenen Fahrzeugs (11-i) in Abhängigkeit der noch fehlenden Lademenge bis zum Erreichen des Endladezustandes und einer Abweichung des momentanen Ladezustandes des Fahrzeugakkumulators (12-i) von einem durch eine Ladekurve bestimmten Soll-Ladezustand berechnet wird.

3. Verfahren nach Anspruch 1 oder 2,
wobei der Fahrzeugakkumulator (12-i) des elektrobetriebenen Fahrzeugs (11-i) in der ersten Ladephase (S3) mit einer ersten Ladekurve bis zum Erreichen des Mindest-Ladezustandes ($P_{min}$) und in der zweiten Ladephase (S4) mit einer zweiten Ladekurve bis zum Erreichen des End-Ladezustandes ($P_{end}$) aufgeladen wird.

4. Verfahren nach Anspruch 3,
wobei die erste Ladekurve und die zweite Ladekurve jeweils durch eine lineare Ladekurve gebildet werden.

5. Verfahren nach Anspruch 1 bis 4,
wobei der Ladeprioritätswert des angeschlossenen Fahrzeugakkumulators (12-i) des elektrobetriebenen Fahrzeuges (11-i) zusätzlich in Abhängigkeit von weiteren Ladekriterien berechnet wird,
wobei die Ladekriterien aufweisen:

eine Fahrzeugart des elektrobetriebenen Fahrzeuges,
eine Fahrzeugfunktion des elektrobetriebenen Fahrzeuges,
eine Anschlusstageszeit des elektrobetriebenen Fahrzeuges und
eine Vertragspriorität des elektrobetriebenen Fahrzeuges.

6. Sammelladestation (1) zum effizienten Aufladen von Fahrzeugakkumulatoren (12-i) elektrobetriebener Fahrzeuge (11-i) durch jeweilige Ladestationen (2-i) der Sammelladestation, wobei die Fahrzeugakkumulatoren (12-i) sich jeweils entweder in einer ersten Ladephase (S3) oder in einer zweiten Ladephase (S4) befinden,
und wobei die Sammelladestation dazu ausgelegt ist, dass nach Anschluss des jeweiligen Fahrzeugakkumulators (12-i) an die jeweilige Ladestation (2-i) nach einer entsprechender Nutzereingabe der Fahrzeugakkumulator zunächst in der ersten Ladephase (S3) ausgehend von einem Anfangsladezustand ($P_0$) des angeschlossenen Fahrzeugakkumulators (12-i) durch die Ladestation (2-i) gegenüber anderen Fahrzeugakkumulatoren (12-i), die an weiteren Ladestationen (2-i) der Sammelladestation (1) angeschlossen sind und sich in der zweiten Ladephase (S4) befinden, priorisiert aufgeladen wird, bis der Ladezustand dieses Fahrzeugakkumulators (12-i) innerhalb eines einstellbaren Lade-Zeitraumes ($t_{min}$) einen einstellbaren Mindest-Ladezustand ($P_{min}$) erreicht,
bevor in der zweiten Ladephase (S4) die endgültige Aufladung des angeschlossenen Fahrzeugakkumulators (12-i) bis zum Erreichen eines einstellbaren End-Ladezustandes ($P_{end}$) erfolgt, entsprechend eines berechneten Ladeprioritätswertes dieses Fahrzeugakkumulators (12-i), dass die berechneten Ladeprioritätswerte der an den Ladestationen (2-i) der Sammelladestation (1) gleichzeitig angeschlossenen Fahrzeugakkumulatoren (12-i), welche sich in der zweiten Ladephase (S4) befinden, die Reihenfolge bestimmen, in der die verschiedenen Fahrzeugakkumulatoren innerhalb eines Lade-Zeitintervalls durch die Sammelladestation (1) in der zweiten Ladephase (S4) aufgeladen werden, und dass das Aufladen der Fahrzeugakkumulatoren in einstellbaren Scheduling-Zeitintervallen erfolgt, wobei jeweilige Lademengen den Fahrzeugakkumulatoren (12-i) in jedem Scheduling-Zeitintervall neu zugeteilt werden.

7. Sammelladestation nach Anspruch 6,
wobei der Fahrzeugakkumulator (12-i) des elektrobetriebenen Fahrzeuges (11-i) über ein Ladekabel oder mittels induktiver Kopplung mit der Ladestation (2-i) der Sammelladestation (1) verbunden ist.

8. Sammelladestation nach Anspruch 6 oder 7,
wobei die Ladestation (2-i) eine Nutzerschnittstelle (8-i) zur Eingabe von Nutzereinstellungen besitzt,
wobei die Nutzereinstellungen aufweisen:

den in der ersten Ladephase zu erreichenden Mindest-Ladezustand,
den Ladezeitraum bis zum Erreichen des Mindest-Ladezustandes,
den in der zweiten Ladephase zu erreichenden End-Ladezustand, und
den gewünschten Zeitraum bis zum Erreichen des End-Ladezustandes.

9. Sammelladestation nach Anspruch 8,
wobei der zu erreichende Mindest-Ladezustand manuell als Anteil einer Gesamtladekapazität des Fahrzeugakkumulators (12-i) in die Nutzerschnittstelle (8-i) der Ladestation (2-i) eingegeben wird.

10. Sammelladestation nach Anspruch 9,
wobei die Gesamtladekapazität des Fahrzeugakkumulators durch die Ladestation (2-i) anhand des Typs des Fahrzeugakkumulators (12-i) oder anhand des Typs des elektrobetriebenen Fahrzeuges (11-i) durch Zugriff auf eine Datenbank (5) bestimmt wird.

11. Sammelladestation nach Anspruch 6 bis 10,
wobei die Sammelladestation (1) einen Lade-Scheduler (4) aufweist, der das in den Ansprüchen 1 bis 8 angegebenen Verfahren zum effizienten Aufladen eines Fahrzeugakkumulators (12-i) einer elektrobetriebenen Fahrzeuges (11-i) durch eine Ladestation (2-i) der Sammelladestation (1) ausführt und die Ladestationen (2) der Sammelladestation (1) entsprechend ansteuert.

12. Sammelladestation nach Anspruch 6 bis 11,
wobei die Ladestation (2) der Sammelladestation (1) an ein Stromversorgungsnetz (SNV) angeschlossen sind und die zum Laden der Fahrzeugakkumulatoren (12) benötigten Lademengen aus dem Stromversorgungsnetz (SNV) bezieht.

13. Sammelladestation nach Anspruch 6 bis 11,
wobei der an die Ladestation (2-i) angeschlossene Fahrzeugakkumulator (12-i) eingebaut in dem elektrobetriebenen Fahrzeug (11-i) oder aus dem elektrobetriebenen Fahrzeug (11-i) ausgebaut an die Ladestation (2-i) der Sammelladestation (1) angeschlossen ist.

**Claims**

1. Method for the efficient charging of vehicle batteries (12-i) of electric vehicles (11-i) by charging stations (2-i) of a group charging station (1),
wherein the vehicle batteries (12-i) are either in a first charging phase (S3) or in a second charging phase (S4),
wherein, after connection of the respective vehicle battery (12-i) to the respective charging station (2-i) after an appropriate user entry, the vehicle battery (12-i) will initially be charged by the charging station (2-i) in the first charging phase (S3) starting from an initial charge state ($P_0$) of the connected vehicle battery (1), prioritised in relation to other vehicle batteries (12-i) that are connected to further charging stations (2-i) of the group charging station (1) and are located in the second charging phase (S4), until the charge state of this vehicle battery (12-i) reaches a selectable minimum charge state ($P_{min}$) within a selectable charging time ($t_{min}$),
wherein in the second charging phase (S4) the final charging of the connected vehicle battery (12-i) is carried out until an adjustable end charge state ($P_{end}$) is reached, according to a calculated charge priority value of this vehicle battery (12-i),
wherein the calculated charge priority values of the vehicle batteries (12-i)in the second charging phase (S4) and connected at the same time to the charging stations (12-i) of the group charging station (1), determine the order with which the different vehicle batteries (12-i) will be charged within a charging interval in the second charging phase (S4), and
wherein the charging of the vehicle batteries is undertaken in adjustable scheduling intervals, wherein respective charge quantities are reallocated to the vehicle batteries (12-i) in each scheduling interval.

2. Method according to claim 1,
wherein, the charging priority value of the connected vehicle battery (12-i) of the electric vehicle (11-i) is calculated as a function of the amount of charge still outstanding until the end charge state is reached and a deviation of the instantaneous charge state of the vehicle battery (12-i) from a setpoint charge state determined by a charge curve.

3. Method according to claim 1 or 2,
wherein the vehicle battery (12-i) of the electric vehicle (11-i) is charged in the first charging phase (S3) with a first charge curve until the minimum charge state ($P_{min}$) is reached and in the second charging phase (S4) with a second charge curve until the end charge state ($P_{end}$) is reached.

4. Method according to claim 3,
wherein the first charge curve and the second charge curve are each formed by a linear charge curve.

5. Method according to claim 1 to 4,
wherein the charging priority value of the connected vehicle battery (12-i) of the electric vehicle (11-i) is additionally calculated as a function of further charging criteria, wherein the charging criteria have:

   a vehicle type of the electric vehicle,

a vehicle function of the electric vehicle,
a time of day at which the electric vehicle is connected and
a contract priority of the electric vehicle.

6. Group charging station (1) for efficient charging of vehicle batteries (12-i) of electric vehicles (11-i) by respective charging stations (2-i) of the group charging station,
wherein the vehicle batteries (12-i) are each either disposed in a first charging phase (S3) or in a second charging phase (S4),
and wherein the group charging station is configured such that after connection of the respective vehicle battery (12-i) to the respective charging station (2-i) after an appropriate user entry, the vehicle battery (12-i) will initially be charged by the charging station (2-i) in the first charging phase (S3), starting from an initial charge state ($P_0$) of the connected vehicle battery (12-i), prioritised in relation to other vehicle batteries (12-i) that are connected to further charging stations (2-i) of the group charging station (1) and are in the second charging phase (S4), until the charge state of this vehicle battery (12-i) reaches a selectable minimum charge state ($P_{min}$) within a selectable charging time ($t_{min}$), before in the second charging phase (S4) the final charging of the connected vehicle battery (12-i) is undertaken until it reaches an adjustable end charge state ($P_{end}$), in accordance with a calculated charge priority value of this vehicle battery (12-i),
that the calculated charge priority values of the vehicle batteries (12-i) connected at the same time to the charging stations (2-i) of the group charging station (1) which are in the second charging phase (S4) determine the order in which the various vehicle batteries are charged within a charging interval by the group charging station (1) in the second charging phase (S4), and
that the vehicle batteries are charged in adjustable scheduling intervals, wherein respective charge quantities are reallocated to the vehicle batteries (12-i) in each scheduling interval.

7. Group charging station according to claim 6,
wherein the vehicle battery (12-i) of the electric vehicle (11-i) is connected via a charging cable or by means of inductive coupling to the charging station (2-i) of the group charging station (1).

8. Group charging station according to claim 6 or 7,
wherein the charging station (2-i) possesses a user interface (8-i) for entering user settings,
wherein the user settings have:

the minimum charge state to be reached in the first charging phase,
the time until the minimum charge state is reached,
the end charge state to be reached in the second charging phase, and
the desired time until the end charge state is reached.

9. Group charging station according to claim 8,
wherein the minimum charge state to be reached is entered manually into the user interface (8-i) of the charging station (2-i) as a proportion of a total charge capacity of the vehicle battery (12-i).

10. Group charging station according to claim 9,
wherein the total charge capacity of the vehicle battery is determined by the charging station (2-i), based on the type of vehicle battery (12-i) or based on the type of electric vehicle (11-i), by accessing a database (5).

11. Group charging station according to claim 6 to 10,
wherein the group charging station (1) has a load scheduler (4) which executes the method specified in claims 1 to 8 for efficient charging of a vehicle battery (12-i) of an electric vehicle (11-i) by a charging station (2-i) of the group charging station (1) and controls the charging stations (2) of the group charging station (1) accordingly.

12. Group charging station according to claim 6 to 11,
wherein the charging stations (2) of the group charging station (1) are connected to a power supply network (SNV) and obtain the amount of charge needed to charge the vehicle batteries (12) from the power supply network (SNV).

13. Group charging station according to claim 6 to 11,
wherein the vehicle battery (12-i) connected to the charging station (2-i) is connected in an assembled manner in the electric vehicle (11-i) or is connected to the charging station (2-i) of the group charging station (1) in a disassembled manner from the electric vehicle (11-i).

**Revendications**

1. Procédé pour la recharge efficace d'accumulateurs de véhicules (12-i) concernant des véhicules (11-i) fonctionnant à l'électricité via des bornes de recharge (2-i) d'un poste de recharge groupée (1) ;

   dans lequel les accumulateurs de véhicules (12-i) se trouvent respectivement, soit dans une première phase de recharge (S3), soit dans une deuxième phase de recharge (S4) ;

   dans lequel, après le raccordement de l'accumulateur de véhicule respectif (12-i) à la borne de recharge respective (2-i) à la suite d'une entrée utilisateur correspondante, l'accumulateur de véhicule (12-i) est rechargé en priorité d'abord dans la première phase de recharge (S3) à partir d'un état de recharge initial ($P_0$) de l'accumulateur de véhicule raccordé (1) via la borne de recharge (2-i), par rapport à d'autres accumulateurs de véhicules (12-i) qui sont raccordés à d'autres bornes de recharge (2-i) du poste de recharge groupée (1) et qui se trouvent dans la deuxième phase de recharge (S4), jusqu'à ce que l'état de recharge de cet accumulateur de véhicule (12-i) atteigne un état de recharge minimal réglable ($P_{min}$) dans un laps de temps de recharge réglable ($t_{min}$) ;

   dans lequel, dans la deuxième phase de recharge (S4), a lieu la recharge définitive de l'accumulateur de véhicule raccordé (12-i) jusqu'à atteindre un état de recharge final réglable ($P_{end}$), de manière correspondante à une valeur calculée de priorité de recharge de cet accumulateur de véhicule (12-i) ;

   dans lequel les valeurs calculées de priorité de recharge des accumulateurs de véhicules (12-i) raccordés de manière simultanée aux bornes de recharge (12-i) du poste de recharge groupée (1), les accumulateurs en question se trouvant dans la deuxième phase de recharge (S4), déterminent la succession en fonction de laquelle les différents accumulateurs de véhicules (12-i) sont rechargés au sein d'un intervalle de temps de recharge dans la deuxième phase de recharge (S4) ; et

   dans lequel la recharge des accumulateurs de véhicule a lieu dans des intervalles de temps d'ordonnancement réglables, chaque quantité de recharge étant nouvellement attribuée aux accumulateurs de véhicules (12-i) dans chaque intervalle de temps d'ordonnancement.

2. Procédé selon la revendication 1, dans lequel la valeur de priorité de recharge de l'accumulateur de véhicule raccordé (12-i) concernant le véhicule (11-i) fonctionnant à l'électricité est calculée en fonction de la quantité de recharge encore manquante jusqu'à atteindre l'état de recharge final et en fonction d'une déviation de l'état de recharge momentané de l'accumulateur de véhicule (12-i) par rapport à un état de recharge de consigne déterminé par une courbe de recharge.

3. Procédé selon la revendication 1 ou 2, dans lequel l'accumulateur de véhicule (12-i) concernant le véhicule (11-i) fonctionnant à l'électricité est rechargé, dans la première phase de recharge (S3), avec une première courbe de recharge jusqu'à atteindre l'état de recharge minimal ($P_{min}$) et, dans la deuxième phase de recharge (S4), avec une deuxième courbe de recharge jusqu'à atteindre l'état de recharge terminal ($P_{end}$).

4. Procédé selon la revendication 3, dans lequel la première courbe de recharge et la deuxième courbe de recharge sont construites respectivement via une courbe de recharge linéaire.

5. Procédé selon les revendications 1 à 4, dans lequel la valeur de priorité de recharge de l'accumulateur de véhicule raccordé (12-i) concernant le véhicule (11-i) fonctionnant à l'électricité est calculée en outre en fonction d'autres critères de recharge ;

   dans lequel les critères de recharge présentent :

   un type de véhicule concernant le véhicule fonctionnant à l'électricité ;
   une fonction de véhicule concernant le véhicule fonctionnant à l'électricité ;
   un moment de la journée pour le raccordement du véhicule fonctionnant à l'électricité ;
   une priorité contractuelle concernant le véhicule fonctionnant à l'électricité.

6. Poste de recharge groupée (1) pour la recharge efficace d'accumulateurs de véhicules (12-i) concernant des véhicules (11-i) fonctionnant à l'électricité via des bornes de recharge respectives (2-i) du poste de recharge groupée ;

   dans lequel les accumulateurs de véhicules (12-i) se trouvent respectivement, soit dans une première phase de recharge (S3), soit dans une deuxième phase de recharge (S4) ; et

   dans lequel le poste de recharge groupée est conçu :

   de manière telle que, après le raccordement de l'accumulateur de véhicule respectif (12-i) à la borne de recharge respective (2-i) à la suite d'une entrée utilisateur correspondante, l'accumulateur de véhicule est rechargé en priorité d'abord dans la première phase de recharge (S3) à partir d'un état de recharge initial ($P_0$) de l'accumu-

lateur de véhicule raccordé (12-i) via la borne de recharge (2-i), par rapport à d'autres accumulateurs de véhicules (12-i) qui sont raccordés à d'autres bornes de recharge (2-i) du poste de recharge groupée (1) et qui se trouvent dans la deuxième phase de recharge (S4), jusqu'à ce que l'état de recharge de cet accumulateur de véhicule (12-i) atteigne un état de recharge minimal réglable ($P_{min}$) dans un laps de temps de recharge réglable ($t_{min}$) ;
avant le déroulement, dans la deuxième phase de recharge (S4), de la recharge définitive de l'accumulateur de véhicule raccordé (12-i) jusqu'à atteindre un état de recharge final réglable ($P_{end}$), de manière correspondante à une valeur calculée de priorité de recharge de cet accumulateur de véhicule (12-i) ;
de manière telle que les valeurs calculées de priorité de recharge des accumulateurs de véhicules (12-i) raccordés de manière simultanée aux bornes de recharge (2-i) du poste de recharge groupée (1), les accumulateurs en question se trouvant dans la deuxième phase de recharge (S4), déterminent la succession en fonction de laquelle les différents accumulateurs de véhicules sont rechargés au sein d'un intervalle de temps de recharge via le poste de recharge groupée (1) dans la deuxième phase de recharge (S4) ; et
de manière telle que la recharge des accumulateurs de véhicule a lieu dans des intervalles de temps d'ordonnancement réglables, chaque quantité de recharge étant nouvellement attribuée aux accumulateurs de véhicules (12-i) dans chaque intervalle de temps d'ordonnancement.

7. Poste de recharge groupée selon la revendication 6, dans lequel l'accumulateur de véhicule (12-i) concernant le véhicule (11-i) fonctionnant à l'électricité est relié via un câble de recharge ou au moyen d'un accouplement par induction à la borne de recharge (2-i) du poste de recharge groupée (1).

8. Poste de recharge groupée selon la revendication 6 ou 7, dans lequel la borne de recharge (2-i) possède une interface utilisateur (8-i) pour l'entrée de réglages de la part de l'utilisateur ;
dans lequel les réglages de la part de l'utilisateur présentent :

l'état de recharge minimal à atteindre dans la première phase de recharge ;
le laps de temps de recharge jusqu'à atteindre l'état de recharge minimal ;
l'état de recharge final à atteindre dans la deuxième phase de recharge ; et
le laps de temps souhaité jusqu'à atteindre l'état de recharge final.

9. Poste de recharge groupée selon la revendication 8, dans lequel l'état de recharge minimal à atteindre est entré manuellement sous la forme d'une fraction d'une capacité de recharge globale de l'accumulateur de véhicule (12-i), dans l'interface utilisateur (8-i) de la borne de recharge (2-i).

10. Poste de recharge groupée selon la revendication 9, dans lequel la capacité de recharge globale de l'accumulateur de véhicule est déterminée par la borne de recharge (2-i) en fonction du type d'accumulateur de véhicule (12-i) ou en fonction du type de véhicule (11-i) fonctionnant à l'électricité via un accès à une banque de données (5).

11. Poste de recharge groupée selon les revendications 6 à 10, dans lequel le poste de recharge groupée (1) présente un ordonnanceur de recharge (4) qui met en oeuvre le procédé indiqué dans les revendications 1 à 8 pour la recharge efficace d'un accumulateur de véhicule (12-i) concernant un véhicule (11-i) fonctionnant à l'électricité, via une borne de recharge (2-i) du poste de recharge groupée (1) et qui commande de manière correspondante les bornes de recharge (2) du poste de recharge (1).

12. Poste de recharge groupée selon les revendications 6 à 11, dans lequel la borne de recharge (2) du poste de recharge groupée (1) est raccordée à un réseau d'alimentation en courant (SNV) et applique les quantités de recharge requises pour la recharge des accumulateurs de véhicules (12) à partir du réseau d'alimentation en courant (SNV).

13. Poste de recharge groupée selon les revendications 6 à 11, dans lequel l'accumulateur de véhicule (12-i) raccordé à la borne de recharge (2-i) est raccordé à la borne de recharge (2-i) du poste de recharge groupée (1) à l'état tel que monté dans le véhicule (11-i) fonctionnant à l'électricité ou à l'état tel que démonté par rapport au véhicule (11-i) fonctionnant à l'électricité.

# FIG 1

FIG 2

8-1
10-1
7-1
9-1
12-1
11-1
2-1
3-1
6-1

5
DB
Schedule
4

8-2
10-2
7-2
9-2
12-2
11-2
2-2
3-2
6-2

SVN

8-N
7-N
9-N
12-N
A
2-N
3-N
6-N

1

EP 2 428 390 B1

## FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2219278 A1
- EP 0314155 A2
- EP 2131469 A2
- WO 2009012018 A2
- WO 9832209 A1
- JP H11285159 A